# FASCICULE DE BREVET EUROPEEN

(11) **EP 2 136 100 B1**
(45) Date de publication et mention de la délivrance du brevet: **05.12.2012**
(21) Numéro de dépôt: 09155527.6
(22) Date de dépôt: 18.03.2009
(51) Int. Cl.: F16D 65/097

(54) **Plaquette de frein à disque.**
Scheibenbremsbelag
Brake pad

(30) Priorité: 19.06.2008 FR 0803440
(43) Date de publication de la demande: 23.12.2009
(73) Titulaire: Robert Bosch GmbH, 70442 Stuttgart (DE)
(72) Inventeur: Picot, Pascal, 77170, BRIE CONTE ROBERT (FR); Magnaudet, Patrick, 77300, FONTAINEBLEAU (FR)

(56) Documents cités:
- EP-A- 0 686 785
- EP-A- 1 701 055
- US-A- 5 407 034
- US-A- 5 816 370

## Description

L'invention se rapporte à une plaquette de frein à disque prenant place dans un frein à disque d'un véhicule.

Les systèmes de freinage de véhicules automobiles actuels sont généralement munis de freins à disque ou de freins à tambour.

Un frein à disque comporte notamment un étrier de frein à disque, solidaire du châssis du véhicule par l'intermédiaire d'une chape de frein à disque qui, elle, est fixée au châssis du véhicule par l'intermédiaire d'un porte fusée. Un corps de l'étrier comporte un alésage, ou cylindre hydraulique, dans lequel un piston de frein est monté coulissant. Sous l'ensemble piston /étrier prend place la chape de frein, qui comporte en son milieu un espace correspondant à celui ménagé entre le piston et le nez de l'étrier.

Dans cet espace sont montées deux plaquettes de frein à disque, respectivement interne et externe. La plaquette externe est située coté nez de l'étrier, tandis que la plaquette interne est située coté piston de frein. Le disque du frein à disque prend alors place dans l'espace compris entre le piston et le nez de l'étrier tout en étant encadré par les deux plaquettes interne et externe, elles-mêmes étant contenues dans l'espace défini par l'ensemble chape / étrier. Le disque est monté solidaire sur une roue du véhicule et tourne de la même façon.

Des plaquettes de frein à disque sont notamment décrites dans EP 0686785, US 5407 034, EP 1701055 et US 5 816370.

Une chambre hydraulique, remplie de liquide hydraulique, et à volume variable, est située entre un fond du cylindre hydraulique et le piston.

Lors d'un freinage, un liquide hydraulique arrive sous pression dans la chambre hydraulique. L'augmentation de la pression hydraulique dans la chambre entraîne le déplacement du piston en direction de la plaquette interne, jusqu'au contact. La plaquette interne est ainsi déplacée puis accolée au disque. Dans le cas d'un étrier flottant, l'action du disque sur la plaquette interne entraîne un déplacement de recul de l'étrier et notamment de son nez, qui amène ainsi la plaquette externe en contact du disque.

Les deux plaquettes étant montées fixes en rotation, la force de frottement s'exerçant sur le disque en rotation ralentit la roue.

Or, lors d'un freinage, les plaquettes sont à l'origine de bruits, le plus souvent gênants pour le confort acoustique du conducteur du véhicule.

En effet, la garniture de friction de la plaquette, lorsqu'elle est accolée au disque, est soumise à un frottement tangentiel à la périphérie d'une face du disque selon le sens de rotation de la roue. Ce frottement tangentiel engendre de petites vibrations dans la plaquette. Ces vibrations se communiquent à la chape, contre lequel la plaquette vient buter lors du freinage, puis à l'ensemble du châssis. Elles sont à l'origine d'une partie des bruits lors d'un freinage.

Les vibrations sont liées aux frottements entre la garniture de friction de la plaquette et le disque de frein. Elles apparaissent le plus fréquemment pour des pressions de freinage modérées, notamment inférieures à 10⁶ Pa. Au-delà, la pression est suffisante pour que l'effort produit par le piston sur la plaquette de frein bloque solidement la plaquette en butée contre la chape, de sorte qu'elle ne puisse plus vibrer. EP-A-686785 décrit une plaquette munie d'une couche d'amortissement disposée entre la plaque support et la garniture, voir les préambules des revendications.

L'idée est d'empêcher pour des freinages modérés, correspondant par exemple à une conduite en ville ou à une conduite dans un flux de circulation avec des ralentissements à répétition, la transmission des vibrations de la garniture de friction au corps métallique de la plaquette et, par conséquent, à la butée de la chape.

A cet effet, selon EP-A-686785, la plaquette se structure en sandwich avec, pour base, un corps métallique, muni de deux oreilles destinées à venir en butée contre la chape. Contre le corps métallique est fixée une couche d'un matériau viscoélastique, par exemple de type polymère. Cette couche est également fixée à une plaque, sur laquelle enfin la garniture de friction vient se poser.

Ainsi, pour les freinages dont la pression est inférieure le matériau viscoélastique va dissiper, par cisaillement, la transmission des vibrations et donc l'apparition de bruits dans le véhicule.

Le principe est que la structure empilée, formée respectivement du corps métallique, de la couche viscoélastique, de la plaque et de la garniture, se déforme élastiquement, avec un jeu contrôlé, lors d'une pression inférieure.

L'invention a pour objet un ensemble comportant une chape et une plaquette telle que revendiquée dans les revendications.

Ainsi, lorsque le corps métallique vient en butée contre la chape de frein lors d'un freinage faible, les bords de la plaque ou de la garniture ne viennent pas au contact du bord interne de l'évidement du corps métallique. Les vibrations éventuelles de la garniture en frottement contre le disque de frein sont transmises à la plaque. Ces vibrations sont complètement amorties au sein de la couche viscoélastique et donc inexistantes dans le corps métallique. Pour autant, la raideur de la couche viscoélastique permet la transmission de l'effort de freinage entre l'ensemble garniture / plaque et le corps métallique.

Pour une pression de freinage plus importante supérieure à 10⁶ Pa, la couche viscoélastique se déforme, en raison de l'effort de cisaillement, selon une direction parallèle à son plan. Le matériau viscoélastique utilisé travaille très bien en cisaillement et ne se déchire pas. Sa déformation amène le bord de la plaque en contact avec le bord interne de l'évidement du corps métallique, afin que l'effort de freinage plus important soit appliqué directement de l'ensemble garniture / plaque au corps métallique, et donc à la butée de la chape. Ainsi, le contact direct entre la plaque et le corps métallique permet de transmettre un effort correspondant à un freinage puissant.

Selon une forme préférentielle de l'invention, une couche de matériau viscoélastique est solidement fixée d'un coté sur le corps métallique et de l'autre sur la plaque par collage ou par thermo-soudage.

Selon une forme préférentielle de l'invention, une couche de matériau viscoélastique est fixement retenue entre le corps métallique d'un coté et la plaque de l'autre par au moins une vis, traversant successivement le corps métallique, la couche viscoélastique, la plaque et se vissant dans la garniture de friction.

Selon une forme préférentielle de l'invention, le corps métallique possède une oreille de butée sur la chape à chacune de ses extrémités.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
Figure 1 : une représentation en perspective de la plaquette selon un mode de réalisation de l'invention.
Figure 2 : une vue en coupe de la plaquette face au disque de frein, selon un plan parallèle à l'axe de rotation du disque et contenant l'axe longitudinal de la plaquette.
Figure 3 : une vue en coupe de la plaquette face au disque de frein selon le même plan que la figure 2, dans le cas d'un freinage puissant.
Figure 4 : une vue en couple de la plaquette selon un autre mode de réalisation de l'invention, selon le même plan que les figures 2 et 3.
Figure 5 : une représentation en perspective de la plaquette selon autre un mode de réalisation de l'invention.

Les références ci-dessous sont utilisées dans les figures suivantes :
- 1 : plaquette de frein
- 2 : porte-garniture
- 3 : garniture de friction
- 4 : corps métallique
- 5 : plaque
- 6 : couche viscoélastique
- 7 : oreille du corps métallique 4
- 8 : évidement du corps métallique 4
- 9 : épaisseur de la couche 6
- 10 : épaisseur de la plaque 5
- 11 : profondeur de l'évidement 8
- 12 : disque de frein
- 13 : espace d'écartement entre le bord intérieur 14 du corps métallique 4 et l'ensemble plaque 5 / couche 6
- 14 : bord intérieur de l'évidement du corps métallique 4
- 15 : vis
- 16 : trou de fixation
- 17 : chape de frein
- 18 : espace séparant le bord extérieur de la plaque 5 avec la butée du corps métallique 4 contre la chape 17.

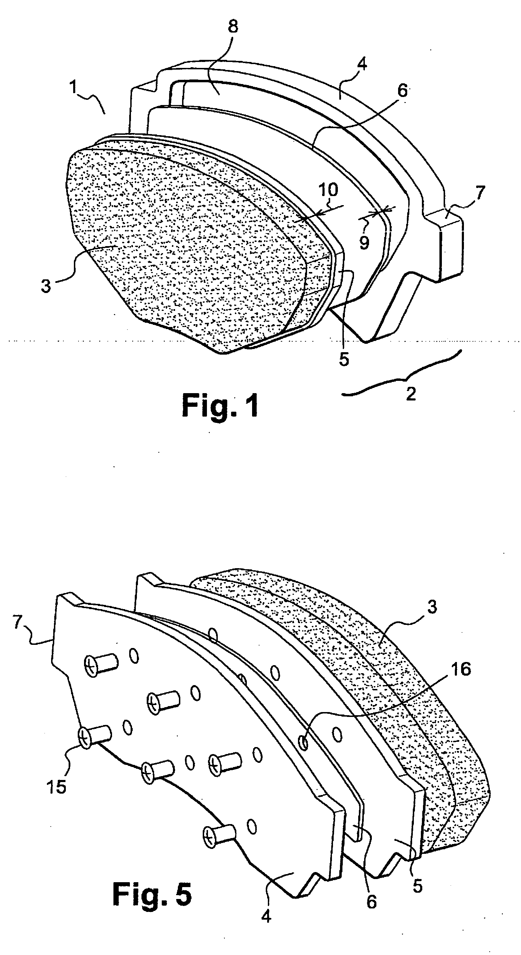

Sur la figure 1 est représentée une plaquette de frein 1 selon l'invention. La plaquette de frein 1 comporte un porte-garniture 2 et une garniture de friction 3. Le porte-garniture 2 est composé d'un corps métallique 4 et d'une plaque 5. Préférentiellement, la plaque 5 est également métallique. Sur une première face de la plaque 5 est fixement apposée une face de la garniture 3. Entre une face du corps métallique 4 et la seconde face de la plaque 5 est intercalée une couche 6 d'un matériau viscoélastique. Le corps métallique 4 de forme globalement rectangulaire comporte sur sa longueur une légère convexité, correspondant sensiblement à la courbure d'un disque de frein. Le corps métallique 4 comporte à chacune de ses deux largeurs une oreille 7. Le porte-garniture 2 prend place dans la chape de frein, de sorte que la surface d'une garniture 3 soit parallèle à la surface du disque. Dans ce cas, les oreilles 7 s'insèrent entre deux butées de la chape, sur l'une desquelles, selon le sens de rotation du disque de frein, vient prendre appui l'une des deux oreilles 7. Le corps métallique 4 comporte, dans son épaisseur et le long de sa face orientée vers la couche 6, un évidement 8. Cet évidement 8 est tel qu'il permet à la totalité de la surface longitudinale de la couche 6 d'y prendre place. L'épaisseur 9 de la couche 6 est inférieure à une profondeur de cet évidement 8. La surface de la plaque 5 sur laquelle est fixée la couche 6 est identique à celle de la couche 6 et prend également place, sur tout ou partie de son épaisseur 10, au sein de l'évidement 8. Sur le plan pratique, pour la fabrication, la couche 6 est portée d'abord sur la plaque 5. Au besoin les bavures sont éliminées. Puis, l'ensemble est mis en place dans l'évidement 8.

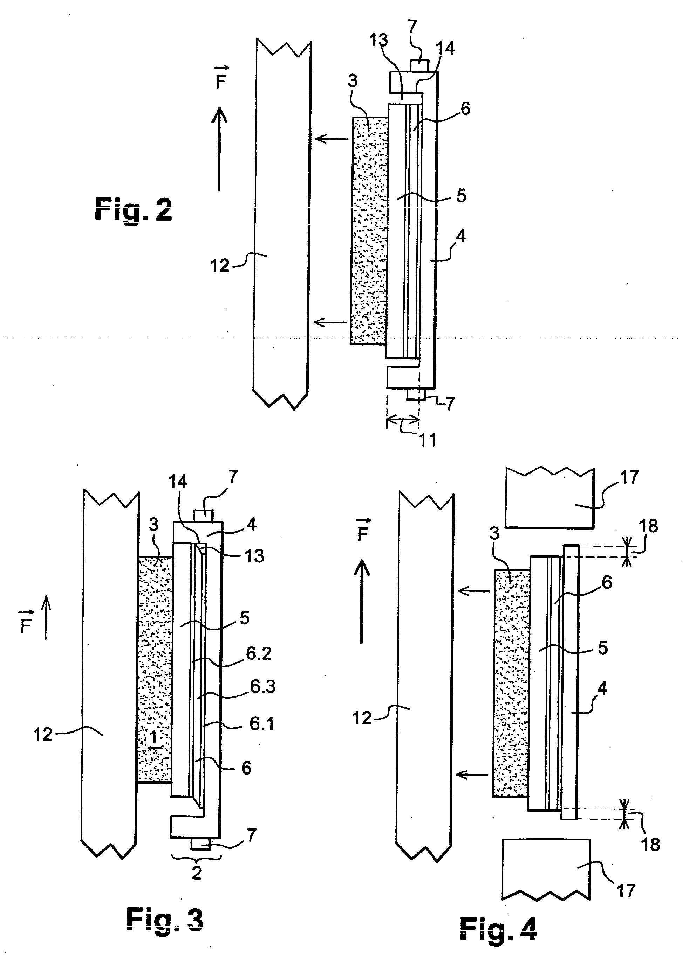

Sur la figure 2, la couche 6 et la plaque 5 sont fixées, *via* la seconde face de la couche 6, au corps métallique 4. L'épaisseur cumulée des épaisseurs 9 et 10 respectivement de la couche 6 et de la plaque 5 correspond à la profondeur 11 de l'évidement 8. La garniture 3 de friction ne prend pas place au sein de l'évidement 8 du corps métallique 4. Les bords situés à la périphérie de la couche 6 et de la plaque 5 sont distants d'un espace 13 du bord intérieur correspondant à l'évidement 8 du corps métallique 4.

L'espace 13 peut être périphérique à l'ensemble garniture 3 / plaque 5 / couche 6. Il est surtout utile dans les régions de l'évidement 8 proches des oreilles 7. L'absence de contact lors d'un effort de freinage faible, par exemple inférieur à 10⁶ Pa environ, évite ainsi la transmission de vibrations et/ou de bruits au travers de la plaquette et du frein en général.

Lors d'un freinage générant une pression de la garniture 3 sur le disque 12 inférieure à 10⁶ Pa environ, la garniture 3 établit une force de friction F de façon à freiner la course du disque 12. Cette force de friction F est parallèle à la surface du disque 12 et se transmet, de la même façon, respectivement à la plaque 5, à la couche 6 puis au corps métallique 4. Le corps métallique 4 ainsi entraîné prend alors appui, avec l'une de ses oreilles 7, contre une butée de la chape de frein. Cette butée est placée en regard de l'oreille 7 dans le sens de rotation du disque 12. Le matériau viscoélastique de la couche 6 possède un coefficient de cisaillement suffisant pour ne se déformer que très légèrement sous la contrainte générée par la force F. Avec un freinage de cette intensité, la plaque 5 ne vient donc pas en butée contre la paroi intérieure 14 de l'évidement 8, ce qui évite les bruits liés à la transmission des vibrations de freinage.

Sur la figure 3, pour un effort de freinage supérieur à 10⁶ Pa environ, le coefficient de cisaillement du matériau viscoélastique est tel qu'il induit une déformation de la couche 6 jusqu'au bord intérieur 14 de l'évidement 8. La couche de matériau viscoélastique se compose ainsi d'une partie 6.1 d'une peau fixée et solidaire du corps métallique 4 quel que soit l'effort soumis, d'une partie d'une peau équivalente 6.2 fixée et solidaire de la plaque 5 et, entre les deux, une partie 6.3 générant la déformation selon l'intensité de l'effort exercé. Dans le cas présent, cette partie se déforme de telle sorte que le bord extérieur correspondant à l'épaisseur de la plaque 5 vient en contact contre le bord intérieur 14 du corps métallique 4, lui-même déjà en butée avec son oreille 7 contre la chape de frein.

Ainsi, un effort important est transmis par le contact direct de la plaque 5 avec le corps métallique 4 et de celui-ci avec la chape. La déformation de la couche viscoélastique 6 doit correspondre à une longueur de l'espace 13 séparant le bord extérieur de la plaque 5 avec la paroi intérieure 14 de l'évidement 8 du corps métallique 4. Cette longueur ne peut, en pratique, être supérieure à l'épaisseur de la couche 6. Après l'effort de freinage, le matériau viscoélastique retrouve sa forme initiale afin de permettre d'autres séquences de freinage. Aucune rupture ou déchirement entre les parties 6.1, 6.2 et 6.3 de la couche 6 ne doit apparaître dans la structure du matériau. Les parties 6.1 et 6.2 permettent un collage ou un thermo-soudage le long respectivement du corps métallique 4 et de la plaque 5.

La figure 4 représente une vue en coupe de la plaquette selon un autre mode de réalisation de l'invention. Selon ce mode de réalisation, le corps métallique 4 ne comporte pas d'évidement. En cas de freinage modéré, générant une pression de la garniture 3 sur le disque 12 inférieure à 10⁶ Pa environ, la force de friction F conduit le corps métallique 4 à venir en butée sur la chape de frein 17. Le matériau viscoélastique de la couche 6 possède un coefficient de cisaillement suffisant pour ne se déformer que très légèrement sous la contrainte générée par la force F. Avec un freinage de cette intensité, la plaque 5 ne vient donc pas en butée contre la chape de frein 17, ce qui évite les bruits liés à la transmission des vibrations de freinage.

Au contraire, pour un effort de freinage supérieur à 10⁶ Pa environ, le coefficient de cisaillement du matériau viscoélastique est tel qu'il induit une déformation de la couche 6 jusqu'à la butée de la chape de frein 17. Ceci permet la transmission d'un effort important de la plaque 5 à la chape 17, contre laquelle elle vient alors en butée. La déformation de la couche viscoélastique 6 doit correspondre à une longueur de l'espace 18 séparant le bord extérieur de la plaque 5 avec la butée du corps métallique 4 contre la chape 17. Cette longueur ne peut, en pratique, être supérieure à l'épaisseur de la couche 6. Après l'effort de freinage, le matériau viscoélastique retrouve sa forme initiale, afin de permettre d'autres séquences de freinage.

La figure 5 représente un autre mode de réalisation de l'invention. L'empilage et l'assemblage du corps métallique 4, de la couche viscoélastique 6, puis de la plaque 5 avec la garniture 3, est réalisé à l'aide de vis 15. Ces vis 15 sont introduites à partir de la face du corps métallique 4 orientée du coté de la chape, traversent successivement la couche 6 et la plaque 5 et viennent se visser dans la garniture 3. La garniture 3 et/ou la plaque 5 comporte alors, du coté opposé au disque, un filetage permettant de recevoir la vis 15. Une vis 15, en un matériau à base de polymères, possède des propriétés viscoélastiques lui permettant de se déformer comme le matériau viscoélastique de la couche 6, de manière à accompagner la plaque 5 contre le corps métallique 4 lors d'un freinage puissant.

Selon une variante de cet assemblage de la plaquette par vis, on prévoit une tête de vis flottante de telle sorte qu'elle puisse se déplacer dans le plan du corps métallique 4, mais en maintenant la tension solidarisant le corps métallique 4 à la garniture 3. A cet effet, la tête de la vis 15 est fraisée dans l'épaisseur du corps métallique 4 et les trous 16 de passage d'une vis 15 au travers de la couche 6 sont alors plus grands que le diamètre de la vis 15. La taille de ces trous 16 doit être au moins égal au diamètre de la vis 15 plus deux fois le déplacement maximum d'un point de la couche 6 lors du contact de la plaque 5 sur le corps métallique 4.

## Revendications

1. Ensemble comportant une chape (17) de frein à disque et une plaquette (1) de frein à disque prenant place au sein de la dite chape, la plaquette (1) comportant un porte-garniture (2) composé d'un corps métallique (4) et d'une plaque (5), comportant également une garniture (3) de friction fixée sur une face de la plaque (5), le porte-garniture (2) comportant un moyen viscoélastique pour lier le corps métallique (4) et la plaque (5),
le moyen viscoélastique consistant en une couche (6) d'un matériau viscoélastique prenant place entre le corps métallique (4) et la plaque (5) et
la couche (6) de matériau viscoélastique et la plaque (5) possédant une surface équivalente, le bord périphérique de la plaque (5) étant espacé d'un espace (18) de la butée du corps métallique (4) contre la chape (17),
**caractérisé en ce que**
l'espace (18) possède une dimension apte à permettre une déformation, sans rupture ou déchirement, de la couche (6) de matériau viscoélastique lors d'une pression de contact de la garniture (3) de friction sur un disque (12) supérieure à 10⁶ Pa, pression pour laquelle le corps métallique (4) vient en butée contre la chape (17) et la plaque (5) vient en contact contre la chape (17).

2. Ensemble comportant une chape (17) de frein à disque et une plaquette (1) de frein à disque prenant place au sein de la dite chape, la plaquette (1) comportant un porte-garniture (2) composé d'un corps métallique (4) et d'une plaque (5), comportant également une garniture (3) de friction fixée sur une face de la plaque (5), le porte-garniture (2) comportant un moyen viscoélastique pour lier le corps métallique (4) et la plaque (5)
le moyen viscoélastique consistant en une couche (6) d'un matériau viscoélastique prenant place entre le corps métallique (4) et la plaque (5), et
la couche (6) de matériau viscoélastique et la plaque (5) possédant une surface équivalente,
**caractérisé en ce que**
la couche (6) de matériau viscoélastique et une partie de la plaque (5) ont leur épaisseur comprise dans un évidement (8) du corps métallique (4),
le bord périphérique de la plaque (5) étant espacé d'un espace (13) du bord intérieur (14) de l'évidement (8) du corps métallique (4), et
l'espace (13) possède une dimension apte à permettre une déformation, sans rupture ou déchirement, de la couche (6) de matériau viscoélastique lors d'une pression de contact de la garniture (3) de friction sur un disque (12) supérieure à 10⁶ Pa, pression pour laquelle le corps métallique (4) vient en butée contre la chape (17) et le bord périphérique de la plaque (5) vient en contact contre le bord intérieur (14) de l'évidement (8) du corps métallique (4).

## Claims

1. Assembly comprising a disc-brake carrier (17) and a disc-brake pad (1) situated within the said carrier, the pad (1) comprising a lining carrier (2) consisting of a metal body (4) and of a plate (5), also comprising a friction lining (3) attached to one face of the plate (5), the lining carrier (2) comprising a viscoelastic means for binding the metal body (4) and the plate (5), the viscoelastic means consisting of a layer (6) of a viscoelastic material situated between the metal body (4) and the plate (5) and the layer (6) of viscoelastic material and the plate (5) having an equivalent surface, the peripheral edge of the plate (5) being at a distance of a space (18) from the abutment of the metal body (4) against the carrier (17),
**characterized in that**
the space (18) has a dimension capable of allowing a deformation, without breakage or tearing, of the layer (6) of viscoelastic material when there is a contact pressure of the friction lining (3) on a disc (12) that is greater than 10⁶ Pa, a pressure for which the metal body (4) butts against the carrier (17) and the plate (5) comes into contact against the carrier (17).

2. Assembly comprising a disc-brake carrier (17) and a disc-brake pad (1) situated within the said carrier, the pad (1) comprising a lining carrier (2) consisting of a metal body (4) and a plate (5), also comprising a friction lining (3) attached to one face of the plate (5), the lining carrier (2) comprising a viscoelastic means for binding the metal body (4) and the plate (5),
the viscoelastic means consisting of a layer (6) of a viscoelastic material situated between the metal body (4) and the plate (5), and
the layer (6) of viscoelastic material and the plate (5) having an equivalent surface,
**characterized in that**
the layer (6) of viscoelastic material and a portion of the plate (5) have their thickness included in a recess (8) of the metal body (4),
the peripheral edge of the plate (5) being at a distance of a space (13) from the inner edge (14) of the recess (8) of the metal body (4), and
the space (13) has a dimension capable of allowing a deformation, without breakage or tearing, of the layer (6) of viscoelastic material when there is a contact pressure of the friction lining (3) on a disc (12) that is greater than 10⁶ Pa, a pressure for which the metal body (4) butts against the carrier (17) and the peripheral edge of the plate (5) comes into contact against the inner edge (14) of the recess (8) of the metal body (4).

## Patentansprüche

1. Einheit, die einen Scheibenbremsen-Gabelkopf (17) und einen Scheibenbremsenbelag (1) aufweist, der im Gabelkopf untergebracht ist, wobei der Belag (1) einen Bremsbelagträger (2) aufweist, der aus einem metallischen Körper (4) und aus einer Platte (5) besteht, die ebenfalls einen Reibungsbelag (3) aufweist, der auf einer Seite der Platte (5) befestigt ist, wobei der Bremsbelagträger (2) ein viskoelastisches Mittel aufweist, um den metallischen Körper (4) und die Platte (5) zu verbinden, wobei das viskoelastische Mittel aus einer Schicht (6) eines viskoelastischen Materials besteht, das zwischen dem Metallkörper (4) und der Platte (5) eingefügt wird, und
wobei die Schicht (6) aus viskoelastischem Material und die Platte (5) eine äquivalente Fläche besitzen, wobei der Umfangsrand der Platte (5) durch einen Zwischenraum (18) zum Anschlag des metallischen Körpers (4) gegen den Gabelkopf (17) beabstandet ist,
**dadurch gekennzeichnet, dass**
der Zwischenraum (18) eine Abmessung besitzt, die ohne Bruch oder Zerreißen eine Verformung der Schicht (6) aus viskoelastischem Material bei einem Kontaktdruck des Reibungsbelags (3) auf eine Scheibe (12) von mehr als 10⁶ Pa erlauben kann, Druck, bei dem der metallische Körper (4) gegen den Gabelkopf (17) in Anschlag und die Platte (5) gegen den Gabelkopf (17) in Kontakt kommt.

2. Einheit, die einen Scheibenbremsen-Gabelkopf (17) und einen Scheibenbremsenbelag (1) aufweist, der im Gabelkopf untergebracht ist, wobei der Belag (1) einen Bremsbelagträger (2) aufweist, der aus einem metallischen Körper (4) und aus einer Platte (5) besteht, die ebenfalls einen Reibungsbelag (3) aufweist, der auf einer Seite der Platte (5) befestigt ist, wobei der Bremsbelagträger (2) ein viskoelastisches Mittel aufweist, um den metallischen Körper (4) und die Platte (5) zu verbinden,
wobei das viskoelastische Mittel aus einer Schicht (6) eines viskoelastischen Materials besteht, die zwischen dem metallischen Körper (4) und der Platte (5) eingefügt wird, und
die Schicht (6) aus viskoelastischem Material und die Platte (5) eine äquivalente Fläche besitzen, **dadurch gekennzeichnet, dass**
die Dicke der Schicht (6) aus viskoelastischem Material und eines Teils der Platte (5) in einer Aussparung (8) des metallischen Körpers (4) enthalten sind,
der Umfangsrand der Platte (5) durch einen Zwischenraum (13) vom Innenrand (14) der Aussparung (8) des metallischen Körpers (4) beabstandet ist, und
der Zwischenraum (13) eine Abmessung besitzt, die ohne Bruch oder Zerreißen eine Verformung der Schicht (6) aus viskoelastischem Material bei einem Kontaktdruck des Reibungsbelags (3) auf eine Scheibe (12) von mehr als 10⁶ Pa erlaubt, Druck, bei dem der metallische Körper (4) gegen den Gabelkopf (17) in Anschlag und der Umfangsrand der Platte (5) gegen den Innenrand (14) der Aussparung (8) des metallischen Körpers (4) in Kontakt kommt.
